# EUROPÄISCHE PATENTSCHRIFT

(11) **EP 1 851 523 B1**
(45) Veröffentlichungstag und Bekanntmachung des Hinweises auf die Patenterteilung: **27.06.2012**
(21) Anmeldenummer: 06705998.0
(22) Anmeldetag: 21.02.2006
(51) Int. Cl.: G01L 5/00

(54) **VERFAHREN ZUR ERFASSUNG VON LOKALEN EIGENSPANNUNGEN IN FESTKÖRPEROBJEKTEN MIT EINER IONENSTRAHLTECHNIK**
METHOD FOR RECORDING LOCAL RESIDUAL STRESSES IN SOLID OBJECTS USING AN ION BEAM TECHNIQUE
PROCEDE POUR SAISIR DES CONTRAINTES PROPRES LOCALES DANS DES OBJETS SOLIDES AU MOYEN D'UN FAISCEAU IONIQUE

(30) Priorität: 23.02.2005 DE 102005008281
(43) Veröffentlichungstag der Anmeldung: 07.11.2007
(73) Patentinhaber: Fraunhofer-Gesellschaft zur Förderung der angewandten Forschung e.V., 80686 München (DE)
(72) Erfinder: AUERSPERG, Jürgen, 09127 Chemnitz (DE); LIESKE, Daniel, 01983 Woschkow (DE); KELLER, Jürgen, 10245 Berlin (DE); VOGEL, Dietmar, 12529 Berlin (DE); MICHEL, Bernd, 09119 Chemnitz (DE); GOLLHARDT, Astrid, 12107 Berlin (DE); DOST, Michael, 09131 Chemnitz (DE)
(74) Vertreter: Gagel, Roland
(86) Internationale Anmeldenummer: PCT/DE2006/000315
(87) Internationale Veröffentlichungsnummer: WO 2006/089524

(56) Entgegenhaltungen:
- DE-A1- 10 037 857
- US-A- 3 943 758
- US-B1- 6 470 756
- KANG K J ET AL: "A method for in situ measurement of the residual stress in thin films by using the focused ion beam" PREPARATION AND CHARACTERIZATION, ELSEVIER SEQUOIA, NL, Bd. 443, Nr. 1-2, 22. Oktober 2003 (2003-10-22), Seiten 71-77, XP004458343 ISSN: 0040-6090
- BIAO LI, HUIMIN XIE, BAI XU: "Investigation of Strain in Microstructures by a Novel Moiré Method" Journal of Microelectromechanical Systems IEEE USA, Bd. 11, Nr. 6, Dezember 2002 (2002-12), Seiten 829-836, XP002382623 ISSN: 1057-7157

## Beschreibung

### Technisches Anwendungsgebiet

Die vorliegende Erfindung betrifft ein Verfahren zur Erfassung von lokalen Eigenspannungen in Festkörperobjekten, bei dem durch externe Energie- oder Impulseinwirkung eine lokale Materialmanipulation am Festkörperobjekt vorgenommen wird, die zu einer Umverteilung von Spannungs- und/oder Dehnungsverhältnissen im Festkörperobjekt führt, wobei vor und nach der Materialmanipulation jeweils zumindest eine Aufnahme eines von der Materialmanipulation betroffenen Oberflächenbereiches des Festkörperobjekts gemacht wird, und aus einem Vergleich der beiden Aufnahmen von den Eigenspannungen verursachte Deformationsfelder an der Oberfläche bestimmt werden, aus denen die lokalen Eigenspannungen abgeleitet werden können.

Viele Objekte weisen aufgrund ihres Herstellungsprozesses Eigenspannungen auf, die beim Einsatz der Objekte, beispielsweise mikroelektronischer oder mikromechanischer Bauteile, früher oder später zum Versagen führen können. Die Erfassung der Eigenspannungen in Objekten ist daher in vielen technischen Bereichen sehr wichtig.

### Stand der Technik

Zum gegenwärtigen Zeitpunkt existieren verschiedene Ansätze und Verfahren zur Messung von Eigenspannungen. Gebräuchlich sind vor allem indirekte Methoden, die Eigenspannungen auf der Basis von Deformationen bestimmen. Dazu gehören vor allem Verfahren, bei denen Eigenspannungen durch Materialabtrag vom Festkörperobjekt freigesetzt und die daraus resultierenden Deformationen gemessen werden. Die inverse mechanische Aufgabenstellung der Bestimmung der Eigenspannungen aus den gemessenen Deformationen kann dann auf der Grundlage von postulierten Eigenspannungshypothesen gelöst werden. Aus den gemessenen Deformationen wird dabei auf die Eigenspannungskomponenten geschlossen, wobei die Art der Eigenspannungszustände, beispielsweise uniaxialer oder biaxialer Eigenspannungszustand, vorausgesetzt wird. Häufig werden den Messverfahren auch analytische Lösungen für das mechanische Problem zugrunde gelegt.

Ein verbreitetes Verfahren zur Erfassung lokaler Eigenspannungen ist die sogenannte Bohrlochmethode, die von der ASTM (American Society for Testing and Materials) als Standard festgelegt wurde. Bei diesem Verfahren wird in das zu vermessende Objekt ein Bohrloch eingebracht, durch das lokale Eigenspannungen im Objekt freigesetzt werden. Die Freisetzung dieser Eigenspannungen führt zu eigenspannungsinduzierten Deformationen im Umfeld des Bohrlochs, die mittels Dehnungsmessstreifen gemessen werden. Die Dehnungsmessstreifen sind dabei meist rosettenförmig um das Bohrloch angeordnet. Durch die mechanische Erzeugung des Bohrlochs sowie die Aufbringung der Dehnungsmessstreifen ist das Verfahren jedoch auf makroskopische Materialbereiche beschränkt. Die erreichbare Deformationsgröße ist bei derartigen Bohrlöchern relativ gering.

In der DE 100 37 857 A1 ist eine Weiterentwicklung des Bohrlochverfahrens beschrieben, bei der auf die aufwendige Aufbringung von Dehnungsmessstreifen verzichtet werden kann. Bei diesem Verfahren werden die Deformationen an der Oberfläche ortsaufgelöst, d. h. als Verschiebungs- bzw. Deformationsfelder, mit optischen Feldmessmethoden wie Topometrie, Objektrasterverfahren mit regelmäßigem oder stochastischem Muster, Speckle-Interferometrie oder Holographie erfasst. Das Verfahren ist ansonsten jedoch in gleicher Weise wie das vorgenannte Verfahren auf makroskopische Materialbereiche eingeschränkt.

Die US 4248094 beschreibt ein Verfahren zur Erfassung von lokalen Eigenspannungen in einem Festkörperobjekt, bei dem mit einem Laserpuls kleine oberflächennahe Bereiche des untersuchten Materials aufgeschmolzen werden. Mit diesem Aufschmelzen werden Deformationen durch die Freisetzung der Eigenspannungen induziert, die wiederum durch Dehnungsmessstreifen gemessen werden. Problematisch bei diesem Verfahren ist die erforderliche Kalibrierung der Messung mit baugleichen stressfreien Komponenten, um thermische Spannungen und Erstarrungsspannungen zu kompensieren, die durch die Beaufschlagung mit dem Laserpuls erzeugt werden. Weiterhin ist eine definierte Materialaufschmelzung in vielen Fällen nicht ohne Probleme zu realisieren.

Die US 6470756 B1 beschreibt ein Verfahren zur Messung von Eigenspannungen, bei dem durch einen definierten Schnitt eine freie Oberfläche im Festkörperobjekt erzeugt wird. Die durch Entlastung der Eigenspannungen bei der Erzeugung der freien Oberfläche hervorgerufene Deformation der Oberfläche wird vermessen und anschließend durch Vergleich mit einer Computersimulation ausgewertet.

Zur Erfassung von lokalen Eigenspannungen im Mikrobereich, beispielsweise in mikroelektromechanischen Systemen (MEMS), ist es bekannt, speziell in die Bauteile eingebrachte Strukturen (Built-In-Strukturen) zur Eigenspannungsmessung zu verwenden. Diese Strukturen deformieren sich in Folge der MEMS-Herstellungsprozesse und ermöglichen eine Bestimmung der durch den Herstellungsprozess in das Bauteil eingebrachten Eigenspannungen. Beispiele für derartige Strukturen sind so genannte "Clamped Beams" oder "Crossbar Rings". Diese eingebauten Strukturen sind allerdings streng ortsgebunden und erlauben damit keine variable Messung von Eigenspannungen an beliebigen Orten. Weiterhin müssen die genannten Strukturen eine Größe aufweisen, die mit Verfahren in der Halbleitertechnik herstellbar ist, so dass auch hier eine begrenzte Miniaturisierbarkeit gegeben ist.

K. J. Kang et al., "A method for in situ measurement of the residual stress in thin films by using the focused ion beam", PREPARATION AND CHARACTERIZATION, ELSEVIER SEQUOIA, NL, Bd. 443, Oct. 2003, S. 71-77, beschreiben ein gattungsgemäßes Verfahren, bei dem die lokale Materialmanipulation mit einem Ionenstrahl erfolgt, mit dem ein dünner Schlitz mit Abmessungen im Mikro- oder Nanometerbereich in oder auf dem Festkörperobjekt erzeugt wird. Der Vergleich der Aufnahmen erfolgt bei dem Verfahren dieser Veröffentlichung mit Hilfe eines Kreuzkorrelations-Algorithmus. Die Aufnahmen werden dabei derart durchgeführt, dass eine große Anzahl von natürlich vorkommenden Oberflächeneigenschaften im Oberflächenbereich erkennbar sind, die als Markierungen für die spätere Korrelation dienen. Die für die spätere Bildkorrelation heranzuziehenden Bereiche werden vor der Materialmanipulation mit dem Ionenstrahl mit einem rechteckigen Rahmen eingegrenzt.

Die Aufgabe der vorliegenden Erfindung besteht darin, ein Verfahren zur Erfassung lokaler Eigenspannungen in Festkörperobjekten anzugeben, das sich ohne Einschränkung im Mikro- und Nanobereich einsetzen läßt.

### Darstellung der Erfindung

Die Aufgabe wird mit dem Verfahren gemäß Patentanspruch 1 gelöst. Vorteilhafte Ausgestaltungen des Verfahrens sind Gegenstand der Unteransprüche oder lassen sich der nachfolgenden Beschreibung sowie den Ausführungsbeispielen entnehmen.

Bei dem vorliegenden Verfahren zur Erfassung von lokalen Eigenspannungen in Festkörperobjekten wird mit einem Ionenstrahl eine lokale Materialmanipulation, vorzugsweise ein Materialabtrag, am Festkörperobjekt vorgenommen, der zu einer Umverteilung von Spannungs- und/oder Dehnungsverhältnissen im Festkörperobjekt führt. Mit dem Ionenstrahl wird hierbei eine Struktur in die Oberfläche oder einen oberflächennahen Bereich des Festkörperobjektes eingebracht, die zumindest in einer Dimension Abmessungen im Mikro- oder Nanometerbereich aufweist. Vor und nach der Materialmanipulation wird jeweils zumindest eine hochaufgelöste mikroskopische Aufnahme des von der Materialmanipulation betroffenen Oberflächenbereiches des Festkörperobjekts gemacht. Aus einem Vergleich der beiden Aufnahmen, der mit einem Verfahren der digitalen Bildkorrelation durchgeführt wird, werden dann von den Eigenspannungen verursachte Deformationsfelder bzw. Verschiebungsfelder an der Oberfläche bestimmt, aus denen die lokalen Eigenspannungen abgeleitet werden können. Das Verfahren zeichnet sich dadurch aus, dass vor der Materialmanipulation mit dem Ionenstrahl ein für die Bildkorrelation geeignetes mikroskopisches Oberflächenmuster in dem Oberflächenbereich erzeugt wird.

Das vorliegende Verfahren basiert somit auf der primären experimentellen Bestimmung von deformationsbedingten Verschiebungs- bzw. Deformationsfeldern an Objektoberflächen, die aus Eigenspannungs-induzierten Materialdehnungen resultieren. Letztere werden an den zu untersuchenden Objekten gezielt durch die Materialmanipulation mit dem Ionenstrahl erzeugt. Unter Materialmanipulation sind hierbei gezielte Materialabtragung, Materialdeposition oder die Veränderung mechanischer Materialeigenschaften mittels Ionenstrahl zu verstehen, die in der Folge eine Umverteilung der Spannungs- bzw. Dehnungsverhältnisse im Objekt hervorrufen, die wiederum als Deformationsfelder messbar sind. Für die Messung der so erzeugten Deformations- bzw. Verschiebungsfelder an der Oberfläche sind vor allem Korrelationsverfahren wie beispielsweise das DIC-Verfahren (Digital Image Correlation) geeignet, die sich in oder im Zusammenhang mit höchst auflösenden Mikroskopen einsetzen lassen.

Durch die Erzeugung von oberflächennahen Strukturen mit Ionenstrahl gelingt es, Strukturabmessungen bis in den Submikrometer- und Nanometerbereich herzustellen. Aufgrund der räumlich begrenzten Einflusszone der Materialmanipulation auf das Materialverhalten können mit dem vorliegenden Verfahren äußerst lokale Eigenspannungszustände untersucht und vermessen werden. Das Verfahren eignet sich dabei insbesondere für die Erfassung bzw. Messung von lokalen Eigenspannungen in Bauteilen und Systemen der Mikro- und Nanotechnologie.

In der bevorzugten Ausgestaltung des Verfahrens wird der Ionenstrahl in einer FIB-Anlage (Focused Ion Beam) erzeugt. In einer Ausgestaltung des Verfahrens erfolgt auch die mikroskopische Aufnahme mit dem Ionenstrahl dieser Anlage.

In einer weiteren Ausgestaltung werden die hochauflösenden mikroskopischen Aufnahmen mit anderen Abbildungswerkzeugen gemacht, insbesondere mit hochauflösenden Rasterverfahren zur Darstellung des Oberflächenbereiches. Beispiele sind die hochauflösende Feldemissions-Elektronenmikroskopie oder die Rastersondenmikroskopie (Scanning-Probe-Mikroskopie) wie z.B. die Atomkraftmikroskopie. Vorzugsweise werden diese zusätzlichen Abbildungsverfahren ebenfalls innerhalb der FIB-Anlage eingesetzt, so dass das gesamte Verfahren mit dieser Anlage durchgeführt werden kann. Derzeit stehen bereits kommerzielle Geräte zur Verfügung, die eine derartige Vorgehensweise ermöglichen. So kombinieren sogenannte Cross-Beam-Anlagen bereits die Rasterelektronenmikroskopie mit der Ionenstrahltechnik.

Für die Ermittlung von Eigenspannungswerten aus den erfassten Deformationsfeldern nach der Materialmanipulation werden bevorzugt Finite-Element-Simulationen eingesetzt, mit deren Hilfe eine Zuordnung zwischen den erzeugten und danach vermessenen Deformationen und ursächlich wirkenden Eigenspannungskomponenten vorgenommen werden kann. Um gezielt einzelne Komponenten des Eigenspannungstensors zu separieren, werden zur Materialmanipulation verschiedene, vorher zu definierende Strukturen erzeugt, vorzugsweise durch Ionenstrahl-Milling oder Ionenstrahl-Deposition. Die Zuordnung zwischen berechneten und simulierten Verschiebungs- bzw. Deformationsfeldern erfolgt über die Annahme von Eigenspannungshypothesen und eine entsprechende mechanische Modellierung für die Finite-Element-Simulationen.

Um aus den Eigenspannungs-induzierten Deformationen nach Materialmanipulation Eigenspannungen zu berechnen, sind weitere mechanische Materialeigenschaften, zumindest der Young'sche Elastizitätsmodul, als Eingangsdaten für die Simulationen erforderlich. Die Bestimmung dieser Materialeigenschaften erfolgt vorzugsweise, soweit erforderlich und möglich, lokal an den zu bewertenden Bereichen des Festkörperobjekts, um gegebenenfalls Größen- und Herstellungs- sowie Alterungseffekte auf die Materialeigenschaften bei den Simulationen korrekt zu berücksichtigen.

### Kurze Beschreibung der Zeichnungen

Das vorliegende Verfahren wird nachfolgend anhand von Ausführungsbeispielen in Verbindung mit den Zeichnungen ohne Beschränkung des durch die Patentansprüche vorgegebenen Schutzbereiches nochmals näher erläutert. Hierbei zeigen:
- Fig. 1: ein Beispiel für den Ablauf bei der Ermittlung von lokalen Eigenspannungen gemäß dem vorliegenden Verfahren;
- Fig. 2: eine schematische Darstellung des zweiten Schrittes des Ablaufs der Figur 1 mit einer kombinierten REM/FIB-Anlage;
- Fig. 3: eine schematische Darstellung des dritten Schrittes des Ablaufs der Figur 1 mit der kombinierten REM/FIB-Anlage;
- Fig. 4: eine schematische Darstellung des vierten Schrittes des Ablaufs der Figur 1 mit der kombinierten REM/FIB-Anlage;
- Fig. 5: schematische Darstellung eines beispielhaften Deformationsfeldes, wie es nach Durchführung der Verfahrensschritte der Figuren 2 bis 4 erhalten werden kann; und
- Fig. 6: ein Beispiel für die Abhängigkeit der mittleren Verschiebungsdifferenz von der uniaxialen Eigenspannung des Materials.

### Wege zur Ausführung der Erfindung

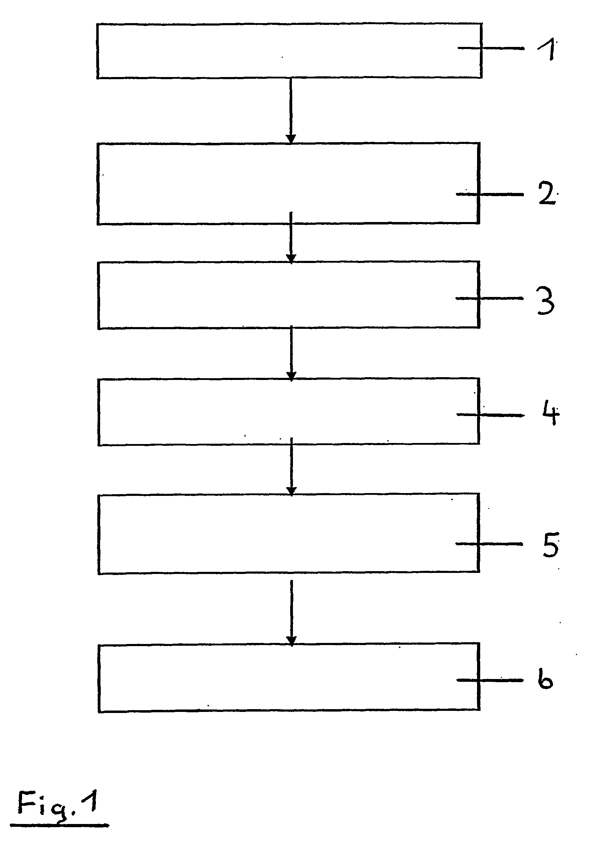

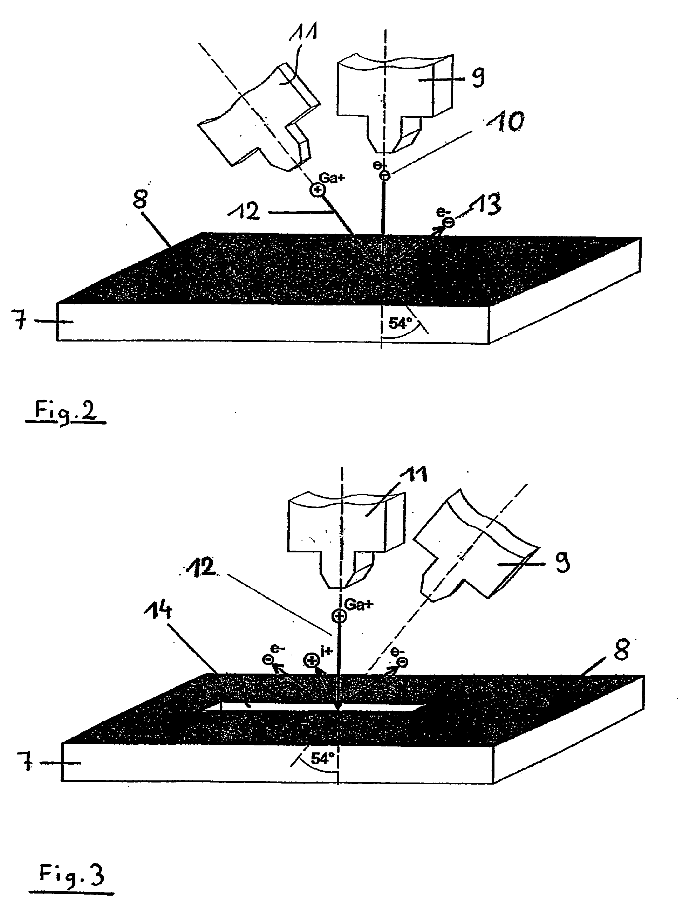

Figur 1 beschreibt ein Beispiel des Ablaufs bei der Ermittlung von Eigenspannungen eines Objektes mittels Focused-Ion-Beam-Technik. Zur Manipulation bzw. Bearbeitung der zu untersuchenden Oberfläche des Objektes 7 wird eine kombinierte REM/FIB-Anlage (REM: Rasterelektronenmikroskop) eingesetzt, von der in Figur 2 lediglich die FIB-Säule 11 und die REM-Säule 9 schematisch dargestellt sind. Die REM-Säule 9 stellt ein hochauflösendes Rasterelektronenmikroskop dar, die FIB-Säule 11 erzeugt den Ionenstrahl 12, mit dem entweder abgebildet oder Material ab- oder aufgetragen werden kann. Beide Einrichtungen befinden sich in einer nicht dargestellten Vakuumkammer, in die auch das Objekt 7 eingebracht wird.

Die FIB-Säule 11 ist im Beispiel gegenüber der senkrecht angeordneten REM-Säule 9 um 54 Grad versetzt. Die Teilchenstrahlen (Elektronenstrahl 10 und Ionenstrahl 12) beider Säulen 9, 11 sind auf die Objektoberfläche 8 fokussiert, die sich auf einem euzentrisch rotierbaren Tisch befindet. Das Objekt 7 kann so rotiert werden, dass es entweder zur FIB- 11 oder zur REM-Säule 9 senkrecht steht und gleichzeitig die Strahlen 10 und 12 auf der Oberfläche fokussiert bleiben.

Im vorbereitenden ersten Verfahrensschritt 1 (Figur 1) wird die Oberfläche 8 des Objekts 7 senkrecht zum Strahlengang des Ionenstrahls 12 justiert. Bei nicht leitenden Objekten wird die Oberfläche 8 vorher mit einem Metall, z. B. mit Gold oder Platin, beschichtet (Schritt 1a). Dadurch werden Oberflächenladungen bei der Abbildung des Objektes mit dem Ionenstrahl 12 oder Elektronenstrahl 10 und somit Pseudodehnungen des Mikroskopbildes über die Zeit vermieden. Bei Materialien wie Platin oder Wolfram wird die Oberfläche 8 zusätzlich gegen einen übermäßigen Materialabtrag durch den Ionenstrahl 12 geschützt.

Um eine spätere Deformation der Objektoberfläche 8 infolge der Materialmanipulationen mit dem Ionenstrahl 12 vermessen zu können, erfolgt zu Beginn eine Oberflächenstrukturierung durch das Schreiben eines Zufallsmusters mit dem Ionenstrahl 12 (Schritt 1b). Dadurch wird ein Oberflächenmuster erzeugt, welches für die spätere digitale Bildkorrelation zur Deformationsmessung an der Objektoberfläche 8 geeignet ist.

Anschließend wird das Objekt 7 auf eine Stellung zurückgekippt, in der die Oberfläche 8 senkrecht zum Strahlengang des Elektronenstrahls 10 liegt (0 GradStellung), und ein Bild von dem zu bewertenden Objektoberflächenbereich mit dem REM aufgenommen (Schritt 2, siehe Figur 2). Alternativ kann die Aufnahme auch mit dem Ionenstrahl 12 (Elektronenstrahl um 54 Grad gekippt) oder mit einem AFM in oder außerhalb der FIB-Anlage durchgeführt werden.

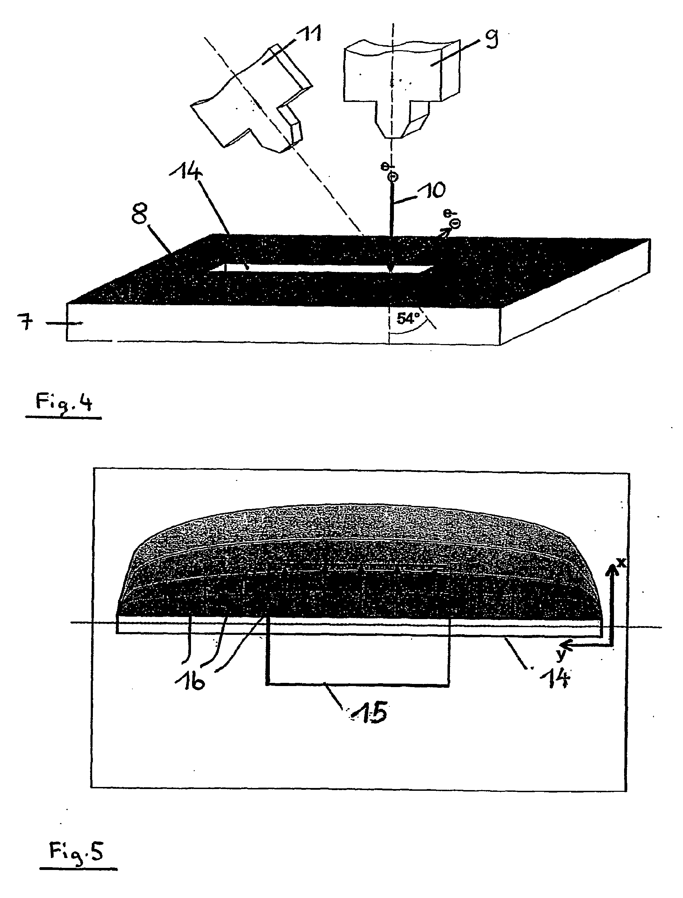

Das Objekt 7 wird danach erneut um 54 Grad gekippt, d. h. der Ionenstrahl 12 ist nunmehr senkrecht zur Objektoberfläche justiert (Figur 3). In diesem Schritt wird beispielsweise ein Mikrograben 14 (Trench) mit dem Ionenstrahl 12 durch Ion Milling in das Objekt 7 eingebracht (Schritt 3, siehe Figur 3). Dieser dient z. B. als Voraussetzung zur Bestimmung eines angenommenen uniaxialen, ebenen Spannungszustandes (einfacher Spannungszustand) in der oberflächennahen Objektschicht. Die durch das Ion Milling infolge der lokalen Freisetzung der Eigenspannung auftretenden Verformungen sind in Figur 5 dargestellt. Anstelle eines Grabens können auch beliebige andere Strukturen, bspw. ein Kreuz oder ein Bohrloch eingebracht werden, um komplexere Spannungszustände, z.B. biaxiale Spannungszustände, zu bestimmen.

Nach dem Zurückkippen des Objektes in die 0 GradStellung (Elektronenstrahl steht senkrecht zur Objektoberfläche) erfolgt die erneute Aufnahme des zu bewertenden Objektoberflächenbereiches mit dem REM, diesmal mit dem erzeugten Graben 14 (Schritt 4, siehe Figur 4).

Beide Mikroskopaufnahmen (Schritte 2 und 4) werden anschließend mittels digitaler Bildkorrelation miteinander verglichen und das lokale Verschiebungsfeld, verursacht durch die Freisetzung von Eigenspannung am Graben 14, wird berechnet (Schritt 5) und als Verschiebungsdatenfeld, z. B. in Form einer Datei, bereit gestellt. Die Verschiebungsdaten werden bei diesem Beispiel in einem äquidistanten Messpunkteraster aus der digitalen Korrelationsanalyse beim Vergleich der beiden Mikroskopaufnahmen gewonnen.

In Figur 5 ist das so erhaltene Verschiebungsfeld mit den Verschiebungsvektoren 16 schematisch dargestellt, das durch Einbringen eines Grabens in einen Oberflächenmaterialbereich mit uniaxialen Eigenspannungen entsteht. Das Fenster 15 der Mikroskopaufnahme liegt ausreichend weit von den Enden des Grabens 14 entfernt etwa in der Mitte des Grabens 14, um weitestgehend konstante Verschiebungen in x-Richtung entlang der Grabenlinie zu initiieren. Es kann daher eine Berechnung der mittleren Verschiebung uₓ an beiden Seiten des Grabens erfolgen, was wiederum auf Grund der statistischen Mittelung zur Verbesserung der Messgenauigkeit beiträgt. Im Anschluss wird die Verschiebungsdifferenz beider Seiten des Grabens 14 zueinander durch Subtraktion berechnet. Diese Differenz ist ein Maß für den Betrag (Größe) und den Richtungssinn (Zug- oder Kompressionsspannungen) der durch das Einbringen des Grabens 14 freigesetzten lokalen Eigenspannungen.

In einem letzten Verfahrensschritt 6 (siehe Figur 1) werden aus der ermittelten mittleren Verschiebungsdifferenz beider Grabenufer zueinander der Wert und das Vorzeichen der Eigenspannung ermittelt. Der ermittelte experimentelle Wert der Verschiebungsdifferenz dient als Vorgabe für den Vergleich mit der anschließenden numerischen Simulation. Mit Hilfe der numerischen Simulation wird das Verschiebungsfeld, angenommen als durch das Einbringen des Grabens hervorgerufen, unter Vorgabe von verschiedenen diskreten Werten und Vorzeichen einer lokalen uniaxialen Eigenspannung des Objektes berechnet. In einem anschließenden Vergleich mit dem gemessenen Feld wird die Eigenspannung des Objektes ermittelt, z. B. durch Anwendung von "Best-Fitting-Methoden". Im einfachsten, des Weiteren diskutierten Fall, wird der bereits erwähnte Mittelwert der Differenz der gegenseitigen Grabenufer-Verschiebung als quantitatives Vergleichskriterium zwischen Messung und Simulation verwendet. Für komplexere Eigenspannungszustände oder Manipulationsstrukturen durch den Ionenstrahl (Verfahrensschritt 3) können auch ganze Verschiebungsfelder miteinander verglichen werden.

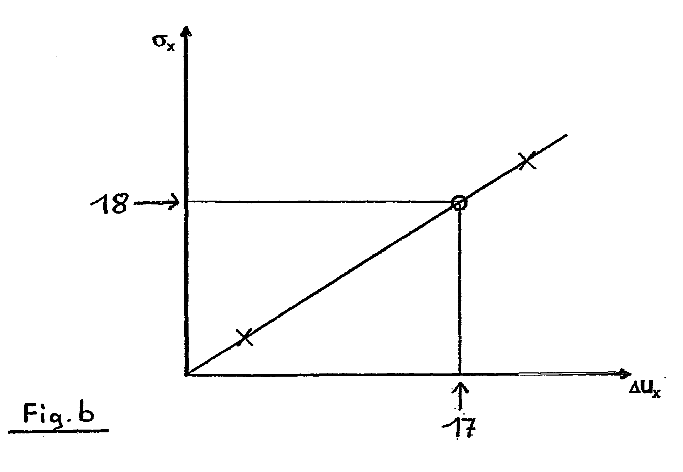

Die Verschiebung im ausreichend weit entfernten Bereich von den Enden des Grabens zeigt für elastisches Materialverhalten eine lineare Abhängigkeit der mittleren Verschiebungsdifferenz Δuₓ von der uniaxialen Eigenspannung σₓ (Figur 6). Diese Tatsache kann durch numerische Simulationen nachgewiesen werden und für die Bestimmung der vorhandenen Eigenspannung nutzbar gemacht werden. Bei Kenntnis elastischer Materialkennwerte, wie des Young´schen E-Moduls und der Poissonzahl, kann bereits aus zwei simulierten Wertepaaren "Eigenspannung versus Verschiebungsdifferenz nach Trenchmilling" der Eigenspannungswert aus dem experimentellen Verschiebungsfeld (gemittelte Verschiebungsdifferenz auf beiden Grabenseiten) ermittelt werden. Hierzu kann eine aus zwei oder mehreren Simulationswerten aufgespannte lineare Kurve zur Interpolation verwendet werden, wie dies aus Figur 6 deutlich wird, in der die Datenpunkte der Simulation mit einem "x" gekennzeichnet sind. Um die lokalen Eigenspannungen am Analyseort zu bestimmen, werden der Young´sche E-Modul und die Poissonzahl der beteiligten Materialien benötigt. Um real vorhandene, ggf. sich vom Bulkmaterial unterscheidende Werte zu berücksichtigen, werden weitere Verfahren der Mikro- und Nanotechnologie zur Bestimmung von Materialkenndaten eingesetzt, beispielsweise Verfahren der Nanoindentation zur lokalen E-Modul-Bestimmung.

### Bezugszeichenliste

- 1: a) Beschichtung der Oberfläche mit Metall bei nicht leitenden Objekten b) Oberflächenstrukturierung bei glatten Oberflächen mit dem Ionenstrahl
- 2: Mikroskopaufnahme der Materialoberfläche mit REM-, FIB- oder AFM-Anlage
- 3: Materialentfernung oder -auftrag durch den Ionenstrahl
- 4: erneute Mikroskopaufnahme der Materialoberfläche
- 5: Messung der durch Deformation verursachten Materialverschiebung durch eine feldmäßige Deformationsanalyse mittels digitaler Bildkorrelation oder Moiré-Technik
- 6: Bestimmung der lokalen Eigenspannung direkt oder durch den Vergleich mit einer numerischen Simulation
- 7: Objekt
- 8: Oberfläche des Objekts
- 9: REM-Säule
- 10: Elektronenstrahl
- 11: FIB-Säule
- 12: Ionenstrahl
- 13: rückgestreute Elektronen
- 14: Mikrograben
- 15: Fenster der Mikroskopaufnahme
- 16: Verschiebungsvektoren
- 17: gemessene Verschiebungsdifferenz
- 18: interpolierte Eigenspannung

## Patentansprüche

1. Verfahren zur Erfassung von lokalen Eigenspannungen in Festkörperobjekten, bei dem durch externe Energie- und/oder Impulseinwirkung eine lokale Materialmanipulation am Festkörperobjekt (7) vorgenommen wird, die zu einer Umverteilung von Spannungs- und/oder Dehnungsverhältnissen im Festkörperobjekt (7) führt, wobei die lokale Materialmanipulation mit einem Ionenstrahl (12) erfolgt, mit dem eine Struktur (14) mit Abmessungen zumindest in einer Dimension im Mikro- oder Nanometerbereich im oder auf dem Festkörperobjekt (7) erzeugt wird, vor und nach der Materialmanipulation jeweils zumindest eine mikroskopische Aufnahme eines von der Materialmanipulation betroffenen Oberflächenbereiches des Festkörperobjekts (7) gemacht wird, und aus einem Vergleich der beiden Aufnahmen, der mit einem Verfahren der digitalen Bildkorrelation durchgeführt wird, von den Eigenspannungen verursachte Deformationsfelder an der Oberfläche (8) bestimmt werden, aus denen die lokalen Eigenspannungen abgeleitet werden können,
**dadurch gekennzeichnet,**
**dass** vor der Materialmanipulation mit dem Ionenstrahl (12) ein für die Bildkorrelation geeignetes mikroskopisches Oberflächenmuster in dem Oberflächenbereich erzeugt wird.

2. Verfahren nach Anspruch 1,
**dadurch gekennzeichnet,**
**dass** mit dem Ionenstrahl (12) als für die Bildkorrelation geeignetes mikroskopisches Oberflächenmuster ein Zufallsmuster in dem Oberflächenbereich erzeugt wird.

3. Verfahren nach Anspruch 1 oder 2,
**dadurch gekennzeichnet,**
**dass** die Materialmanipulation ein Materialabtrag oder eine Materialdeposition ist.

4. Verfahren nach einem der Ansprüche 1 bis 3,
**dadurch gekennzeichnet,**
**dass** die mikroskopischen Aufnahmen mit einem Rasterverfahren, insbesondere mit Feldemissions-Elektronenmikroskopie oder Rastersondenmikroskopie, gemacht werden.

5. Verfahren nach einem der Ansprüche 1 bis 4,
**dadurch gekennzeichnet,**
**dass** der Ionenstrahl (12) in einer FIB-Anlage erzeugt wird und die mikroskopischen Aufnahmen unter Nutzung des Ionenstrahls (12) der FIB-Anlage gemacht werden.

6. Verfahren nach Anspruch 4,
**dadurch gekennzeichnet,**
**dass** der Ionenstrahl (12) in einer FIB-Anlage erzeugt wird, die auch über eine Einrichtung (9) zur Rastermikroskopie verfügt, mit der die mikroskopischen Aufnahmen gemacht werden.

7. Verfahren nach einem der Ansprüche 1 bis 6,
**dadurch gekennzeichnet,**
**dass** die Struktur (14) mittels Ion-Milling erzeugt wird.

8. Verfahren nach Anspruch 7,
**dadurch gekennzeichnet,**
**dass** die Struktur (14) in einer Schicht erzeugt wird, die mit dem Festkörperobjekt (7) verbunden ist, insbesondere auf einer Rückseite des Festkörperobjekts (7) aufgebracht sein kann.

9. Verfahren nach einem der Ansprüche 1 bis 8,
**dadurch gekennzeichnet,**
**dass** zunächst mit dem Ionenstrahl (12) definierte Oberflächenstrukturen auf dem Festkörperobjekt (7) abgeschieden werden, die eine durch die nachfolgende Materialmanipulation ausgelöste Ausbildung der Deformationsfelder beeinflusst.

10. Verfahren nach einem der Ansprüche 1 bis 9, - **dadurch gekennzeichnet,**
**dass** aus den Deformationsfeldern räumliche Eigenspannungskomponenten des Materials des Festkörperobjekts (7) im Mikro- und Nanobereich bestimmt werden.

11. Verfahren nach Anspruch 10,
**dadurch gekennzeichnet,**
**dass** die Bestimmung der räumlichen Eigenspannungskomponenten mit Hilfe von numerischen Simulationen erfolgt, mit denen eine zu erwartende Oberflächendeformation unter der Annahme von vorgegebenen Eigenspannungshypothesen berechnet und mit den gemessenen Deformationsfeldern oder daraus abgeleiteten Größen verglichen wird.

12. Verfahren nach Anspruch 11,
**dadurch gekennzeichnet,**
**dass** einzelne Eigenspannungskomponenten in den numerischen Simulationen als Parameter variiert werden, um unter Einsatz von Best-Fitting-Methoden eine möglichst gute Übereinstimmung der durch die numerischen Simulationen berechneten Oberflächendeformation mit den gemessenen Deformationsfeldern oder den daraus abgeleiteten Größen zu erhalten.

13. Verfahren nach Anspruch 11 oder 12,
**dadurch gekennzeichnet,**
**dass** bei den numerischen Simulationen gegebenenfalls ein Einfluss der Oberflächenmuster auf das Deformationsverhalten berücksichtigt wird, die vor der Materialmanipulation mit dem Ionenstrahl (12) erzeugt wurden.

14. Verfahren nach einem der Ansprüche 11 bis 13,
**dadurch gekennzeichnet,**
**dass** zur Separierung von Eigenspannungskomponenten und/oder zur Überprüfung der bei den Simulationen verwendeten Eigenspannungshypothese mit dem Ionenstrahl (12) verschiedene, speziell gewählte Strukturen (14) zur Materialmanipulation im oder auf dem Festkörperobjekt (7) erzeugt werden.

15. Verfahren nach einem der Ansprüche 11 bis 14,
**dadurch gekennzeichnet,**
**dass** ein oder mehrere für die Simulationen erforderliche Materialparameter und/oder Materialgesetze an dem Festkörperobjekt (7) selbst bestimmt werden.

16. Verfahren nach einem der Ansprüche 1 bis 15,
**dadurch gekennzeichnet,**
**dass** die Struktur (14) in mehreren Schritten im oder auf dem Festkörperobjekt (7) erzeugt wird, wobei nach jedem Schritt von den Eigenspannungen verursachte Deformationsfelder an der Oberfläche (8) bestimmt und ausgewertet werden, um Eigenspannungsgradienten und/oder Eigenspannungsdiskontinuitäten zu erkennen.

## Claims

1. A method for the detection of local internal stresses in solid objects, wherein a local material manipulation on the solid body (7) is carried out by an external-energy and/or pulse effect, said material manipulation leading to a redistribution of stress and/or expansion ratios in the solid object (7), wherein the local material manipulation takes place with an ion beam (12), with which a structure (14) with dimensions at least in the order of the micrometre or nanometre range is produced in or on the solid object (7), at least one microscopic photograph of a surface region of the solid object (7) affected by the material manipulation is taken respectively before and after the material manipulation, and deformation fields at the surface (8) caused by the internal stresses are determined from a comparison of the two photographs, said comparison being carried out using a method of digital image correlation,
**characterised in that**
a microscopic surface pattern suitable for the image correlation is produced in the surface region before the material manipulation with the ion beam (12).

2. The method according to claim 1,
**characterised in that**
a random path is produced in the surface region with the ion beam (12) as a microscopic surface pattern suitable for the image correlation.

3. The method according to claim 1 or 2,
**characterised in that**
the material manipulation is a material removal or a material deposition.

4. The method according to any one of claims 1 to 3,
**characterised in that**
the microscopic photographs are taken with a raster scanning method, in particular by field emission electron microscopy or scanning probe microscopy.

5. The method according to any one of claims 1 to 4,
**characterised in that**
the ion beam (12) is generated in an FIB system and the microscopic photographs are taken using the ion beam (12) of the FIB system.

6. The method according to claim 4,
**characterised in that**
the ion beam (12) is generated in an FIB system which also comprises a device (9) for scanning microscopy, with which the microscopic photographs are taken.

7. The method according to any one of claims 1 to 6,
**characterised in that**
the structure (14) is produced by means of ion milling.

8. The method according to claim 7,
**characterised in that**
the structure (14) is produced in a layer which is connected to the solid object (7), in particular can be deposited on a rear side of the solid object (7).

9. The method according to any one of claims 1 to 8,
**characterised in that**
defined surface structures are first deposited on the solid object (7) with the ion beam (12), which influence a formation of deformation fields initiated by the following material manipulation.

10. The method according to any one of claims 1 to 9,
**characterised in that**
spatial internal stress components of the material of the solid object (7) in the micro- and nano-range are determined from the deformation fields.

11. The method according to claim 10,
**characterised in that**
the determination of the spatial internal stress components takes place with the aid of numeric simulations, with which a surface deformation to be expected is calculated on the assumption of preselected internal stress hypotheses and is compared with the measured deformation fields or magnitudes derived therefrom.

12. The method according to claim 11,
**characterised in that**
individual internal stress components are varied as parameters in the numeric simulations in order to obtain, using best-fitting methods, the best possible agreement of the surface deformation calculated by the numeric simulations with the measured deformation fields or the magnitudes derived therefrom.

13. The method according to claim 11 or 12,
**characterised in that**,
in the numeric simulations, account is taken if required of an influence of the surface patterns on the deformation behaviour, said surface patterns having been produced before the material manipulation with the ion beam (12).

14. The method according to any one of claims 11 to 13,
**characterised in that**,
in order to separate internal stress components and/or to check the internal stress hypothesis used in the simulations, different specially selected structures (14) are produced with the ion beam (12) for the material manipulation in or on the solid object (7).

15. The method according to any one of claims 11 to 14,
**characterised in that**
one or more material parameters and/or material laws required for the simulations are determined on the solid object (7) itself.

16. The method according to any one of claims 1 to 15,
**characterised in that**
the structure (14) is produced in a plurality of steps in or on the solid object (7), wherein deformation fields at the surface (8) caused by the internal stresses are determined and evaluated after each step in order to detect internal stress gradients and/or internal stress discontinuities.

## Revendications

1. Procédé de détection de contraintes internes localisées dans des objets solides, dans lequel on effectue une manipulation de matière par un effet d'énergie et/ou d'impulsion externe sur l'objet solide (7), conduisant à une redistribution des rapports de contrainte et/ou d'allongement dans l'objet solide (7), dans lequel la manipulation de matière localisée est effectuée par un faisceau ionique (12) permettant de créer une structure (14) ayant des dimensions au moins de l'ordre du micromètre ou du nanomètre dans ou sur l'objet solide (7), dans lequel avant et après la manipulation de matière, respectivement au moins une prise de vue microscopique d'une zone de surface concernée par la manipulation de matière de l'objet solide (7) est effectuée, et à partir d'une comparaison des deux prises de vue qui est réalisée par un procédé de corrélation d'images numérique, des champs de déformation de la surface (8) provoqués par les contraintes internes sont déterminés à partir desquels il est possible de déduire les contraintes internes localisées,
**caractérisé en ce**
**qu'**avant la manipulation de matière, un motif de surface microscopique adapté à la corrélation d'images est créé dans la zone de surface par le faisceau ionique (12).

2. Procédé selon la revendication 1,
**caractérisé en ce**
**que** le faisceau ionique (12) permet de créer un motif aléatoire dans la zone de surface en tant que motif de surface microscopique adapté à la corrélation d'images.

3. Procédé selon la revendication 1 ou 2,
**caractérisé en ce**
**que** la manipulation de matière est un enlèvement de matière ou un dépôt de matière.

4. Procédé selon l'une quelconque des revendications 1 à 3,
**caractérisé en ce**
**que** les prises de vue microscopiques sont réalisées par un procédé à balayage, en particulier en microscopie électronique à émission de champ ou microscopie à balayage de sonde.

5. Procédé selon l'une quelconque des revendications 1 à 4,
**caractérisé en ce**
**que** le faisceau ionique (12) est produit dans une installation FIB et les prises de vue microscopiques sont réalisées en utilisant le faisceau ionique (12) de l'installation FIB.

6. Procédé selon la revendication 4,
**caractérisé en ce**
**que** le faisceau ionique (12) est produit dans une installation FIB qui dispose également d'un équipement (9) de microscopie à balayage permettant de réaliser les prises de vue microscopiques.

7. Procédé selon l'une quelconque des revendications 1 à 6,
**caractérisé en ce**
**que** la structure (14) est créée au moyen d'un fraisage ionique.

8. Procédé selon la revendication 7,
**caractérisé en ce**
**que** la structure (14) est créée dans une couche reliée à l'objet solide (7), pouvant en particulier être appliquée à la face arrière de l'objet solide (7).

9. Procédé selon l'une quelconque des revendications 1 à 8,
**caractérisé en ce**
**que** le faisceau ionique (12) est d'abord utilisé pour déposer des structures de surface définies sur l'objet solide (7) qui influence la formation de champs de déformation provoqués par la manipulation de matière consécutive.

10. Procédé selon l'une quelconque des revendications 1 à 9,
**caractérisé en ce**
**que** des composantes spatiales de contrainte interne de la matière de l'objet solide (7) de l'ordre du micromètre ou nanomètre sont déterminées à partir des champs de déformation.

11. Procédé selon la revendication 10,
**caractérisé en ce**
**que** la détermination des composantes spatiales de contrainte interne est effectuée à l'aide de simulations numériques par lesquelles on calcule une déformation de surface attendue en supposant des hypothèses de contrainte interne prédéfinies et les compare aux champs de déformation mesurés ou aux grandeurs déduites de ceux-ci.

12. Procédé selon la revendication 11,
**caractérisé en ce**
**que** des composantes de contrainte interne individuelles sont variées sous forme de paramètres dans les simulations numériques afin d'obtenir par la mise en oeuvre de procédés de régression la meilleure concordance possible entre la déformation de surface calculée par les simulations numériques et les champs de déformation mesurés ou les grandeurs déduites de ceux-ci.

13. Procédé selon la revendication 11 ou 12,
**caractérisé en ce**
**que** lors des simulations numériques, le cas échéant, on prend en considération une influence sur le comportement de déformation par les motifs de surface qui ont été créés avant la manipulation de matière par le faisceau ionique (12).

14. Procédé selon l'une quelconque des revendications 11 à 13,
**caractérisé en ce**
**que** pour séparer des composantes de contrainte interne et/ou pour vérifier l'hypothèse de contrainte interne utilisée lors des simulations, on utilise le faisceau ionique (12) pour créer diverses structures (14) spécialement sélectionnées en vue de la manipulation de matière dans ou sur l'objet solide (7).

15. Procédé selon l'une quelconque des revendications 11 à 14,
**caractérisé en ce**
**qu'**un ou plusieurs paramètres matériels et/ou une ou plusieurs lois constitutives nécessaires aux simulations sont déterminés sur l'objet solide (7) proprement dit.

16. Procédé selon l'une quelconque des revendications 1 à 15,
**caractérisé en ce**
**que** la structure (14) est créée en plusieurs étapes dans ou sur l'objet solide (7), dans lequel après chaque étape, des champs de déformation provoqués par les contraintes internes sur la surface (8) sont déterminés et évalués pour reconnaître des gradients de contrainte interne et/ou des discontinuités de contrainte interne.
